# EUROPÄISCHE PATENTSCHRIFT

(11) **EP 3 476 556 B1**
(45) Veröffentlichungstag und Bekanntmachung des Hinweises auf die Patenterteilung: **03.05.2023**
(21) Anmeldenummer: 18000820.3
(22) Anmeldetag: 22.10.2018
(51) Int. Cl.: B25J 21/00, B23P 21/00

(54) **AUTOMATISIERTES FERTIGUNGSSYSTEM**
AUTOMATED MANUFACTURING SYSTEM
SYSTÈME DE FABRICATION AUTOMATISÉ

(30) Priorität: 26.10.2017 DE 202017005563 U
(43) Veröffentlichungstag der Anmeldung: 01.05.2019
(73) Patentinhaber: Pfeifer, Markus, 78176 Blumberg (DE)
(72) Erfinder: Pfeifer, Markus, 78176 Blumberg (DE)
(74) Vertreter: Tesch, Sabine

(56) Entgegenhaltungen:
- DE-U1- 8 903 033
- JP-A- H 071 298
- US-A- 5 539 975

## Beschreibung

Die Erfindung betrifft ein automatisiertes Fertigungssystem mit einem Industrie-Roboter und weiteren Prozessmaschinen, welche in einem vorbestimmten Arbeitsraum des Fertigungssystems angeordnet sind.

Fertigungssysteme der gattungsgemäßen Art sind schon seit langem bekannt. Diese Fertigungssysteme bestehen in heutiger Zeit aus mehreren Arbeitsstationen, in welchen unterschiedliche Fertigungsabläufe realisiert werden. So gibt es Fertigungsstationen, welche als kombinierte Bohr- und Fräseinrichtungen, als Schweißeinrichtungen oder als Löteinrichtungen zur Bestückung von elektronischen Platinen ausgebildet sind.

Für das Zuführen und Entnehmen von zu bearbeitenden Werkstücken zu den einzelnen Arbeitsstationen ist es bekannt, hierfür Industrie-Roboter einzusetzen. Um nun einen solchen Industrie-Roboter sinnfällig zwischen den einzelnen Arbeitsstationen einzusetzen oder auch als eigenständige Arbeitsstation auszubilden, ist es stets notwendig, entsprechend des zur Verfügung zu stellenden Arbeitsraumes eines solchen Industrie-Roboters Trag- und Ständerkonstruktionen zu entwickeln.

Solche Trag- und Ständerkonstruktionen bestehen in der Regel aus einzelnen rahmenartig ausgebildeten Elementen, welche für jeden Arbeitsraum individuell für jeden Industrie-Roboter auszulegen und zu konstruieren sind. Dies macht insbesondere die Auslegung und Konstruktion des Arbeitsraumes äußerst aufwändig. So ist es stets notwendig, die Arbeitsräume eines Industrie-Roboters auch nach außen derart abzuschirmen, dass unberechtigter Zugang sicher verhindert wird. Des Weiteren sollen auch Kollisionen mit den eigentlichen Arbeitsstationen sicher vermieden werden.

Des Weiteren sind auch Industrie-Roboter bekannt, welche selbständig diverse Fertigungsaufgaben ausführen. So sind Industrie-Roboter bekannt, welche beispielsweise zum Bestücken von Leiterplatinen mit entsprechenden elektronischen Bauteilen ausgebildet sind, wobei die Bauteile vom Industrie-Roboter aus einer Art Magazin entnommen und in die elektronische Platinen eingesetzt werden. Die Platine kann dann vom Industrie-Roboter einer Lötstation zugeführt werden, deren Arbeitsraum beispielsweise in einem separaten Gehäuse untergebracht sein kann und vom Industrie-Roboter zugänglich ist. Dies wäre im Prinzip einer der einfachsten Anwendungsbereiche eines Industrie-Roboters, da hier lediglich ein einziger Roboter einzusetzen ist, welcher für die Bestückung beispielsweise eben solcher Platinen erforderlich ist.

Aber auch für eine solche "einfache" Konstruktion ist es notwendig, den kompletten Arbeitsbereich des Industrie-Roboters von außen unzugänglich abzuschirmen und gleichzeitig die Steuerung für die Bewegungen des Roboters für die Bestückung einer Leiterplatine korrekt auszubilden. Dies macht es zunächst immer erforderlich, den eigentlichen Arbeitsraum eines Industrie-Roboters auszumessen und dementsprechend individuell Rahmenschenkel, Türen, Fenster und dgl. mehr anzupassen, um einen solchen Industrie-Roboter sicher im entsprechend zugehörigen Arbeitsraum anzuordnen.

Des Weiteren können für ein solches automatisiertes Fertigungssystem auch mehrere Industrie-Roboter vorgesehen sein, welche beispielsweise für die Handhabung von einzelnen Werkstücken zwischen den unterschiedlichen Arbeitsstationen erforderlich sind. Insbesondere für solche Ausgestaltungen sind größere Fertigungssysteme zu entwickeln und zu konstruieren, was wiederum mit einem sehr hohen Aufwand verbunden ist. Auch können zwischen den einzelnen Arbeitsstationen und den Roboter-Arbeitsräumen Transporteinrichtungen wie Förderbänder oder dgl. mehr vorgesehen sein, was wiederum zu einem wesentlich höheren konstruktiven Aufwand des gesamten automatisierten Fertigungssystems führt.

Das Dokument US 5,539,975 A zeigt eine Fertigungsplattform mit einer Mehrzahl von Robotern, die in aneinander angereihten Schränken angeordnet sind. Das Dokument JP H07 1298 A zeigt einen in einem Schrank angeordneten Roboter.

Diesbezüglich liegt der Erfindung die Aufgabe zugrunde, ein automatisiertes Fertigungssystem mit einem Industrie-Roboter möglichst einfach zu konzipieren, so dass insbesondere die Kosten für die Errichtung und Aufstellung des gesamten automatisierten Fertigungssystems reduziert werden.

Die Aufgabe wird erfindungsgemäß dadurch gelöst, dass der Arbeitsraum für den Industrie-Roboter durch einen oder mehrere standardisiert vorhandene Schaltschränke definiert ist und dass der oder die Schaltschränke Teil eines Schaltschrank-Anreihsystems sind.

Solche standardisiert vorhandenen Schaltschränke sind schon seit langem bekannt, wie dies beispielsweise aus der Enzyklopädie Wikipedia unter dem Suchbegriff "Schaltschrank" hervorgeht ("https://de.wikipedia.org/wiki/Schaltschrank"). Im einfachsten Fall ist laut dieser Quelle zum Stand der Technik vorgesehen, dass der Schaltschrank bei einer herkömmlichen Anwendung nur Klemmen in Form von Klemmleisten zum übersichtlichen elektrischen Verbinden verschiedener Komponenten einer Anlage beinhaltet. Bei geschlossenen Schaltschränken ist darauf zu achten, dass die zufällige und unbeabsichtigte Berührung spannungsführender Bauteile ausgeschlossen ist.

Solche standardisiert vorhandenen Schaltschränke sind dementsprechend äußerst geeignet, um aus einem Schaltschrank oder aus mehreren Schaltschränken ein automatisiertes Fertigungssystem aufzubauen. So ist erfindungsgemäß vorgesehen, dass wenigstens ein Schaltschrank derart dimensioniert ist, dass dieser in der Lage ist, einen Industrie-Roboter beispielsweise zum Bestücken von Leiterplatinen komplett aufzunehmen.

Da ein solcher Schaltschrank bereits mit Türen versehen ist, welche in einem beliebigen Wandbereich des Schaltschrankes angeordnet sein können, ist auch die Bestückung beispielsweise eines Elektronik-Magazins oder dgl. in einfacher Weise möglich. Des Weiteren sind auch sämtliche Sicherheitsbedingungen eingehalten, da nach Verschließen der Türen der Zugang von außen zum Arbeitsraum des Industrie-Roboters sowie des Magazins nicht mehr möglich ist. Da solche Schaltschrank-Systeme in Form von Anreihsystemen weit verbreitet sind und solche Schaltschränke in unterschiedlichen abgestuften Dimensionen angeboten werden, kann ein automatisiertes Fertigungssystem in einfacher Weise mit herkömmlichen Schaltschränken aufgebaut werden.

Erfindungsgemäß werden somit keine speziellen Robotergehäuse konstruiert und gefertigt, da für diesen Zweck einfach herkömmliche, bereits standardisiert vorhandene Schaltschränke eingesetzt werden. Der Industrie-Roboter, sofern lediglich einer im Fertigungssystem vorgesehen ist, wird in einen Schaltschrank eines Schaltschrank-Anreihsystems eingebaut, so dass damit das automatisierte Fertigungssystem mit dem einen Industrie-Roboter nach dessen integrierter Unterbringung in einem passend dimensionierten Schaltschrank bereits fertig ist. Ist der Schaltschrank "rückseitig" offen ausgebildet, kann dieser beispielsweise auch an eine vorhandene Prozessmaschine beispielsweise in Form einer Spritzgussmaschine adaptiert werden, so dass auch ein unbefugter Zugang zu dieser Spritzgussmaschine durch den "vorgebauten" Schaltschrank im Sinne eines zusätzlichen Schutzgehäuses verhindert wird.

Spezielle konstruktive Auslegungen sind hierbei nicht notwendig. Es ist lediglich erforderlich, den Schaltschrank in einer ausreichenden Dimensionierung sowohl in Bezug auf dessen Größe als auch in Bezug auf die erforderlichen Wandstärken auszuwählen, so dass der Industrie-Roboter mit seinem Arbeitsraum vollständig in den Schaltschrank hineinpasst. Es ist lediglich in Bezug auf den vorgesehenen Arbeitsraum des Industrie-Roboters darauf zu achten, dass die "inneren" Dimensionen des Schaltschrankes ausreichend sind, um die volle Beweglichkeit des Industrie-Roboters sicherzustellen.

Somit ist es möglich, ein Robotersystem bzw. ein automatisiertes Fertigungssystem unter Einsatz eines Robotersystems individuell nach den Bedürfnissen der jeweiligen Anwendung bzw. jeweiligen Fertigungsaufgabe aufzubauen und entsprechend die benötigten Schaltschränke des Anreihsystems aneinander zu reihen. Die Schaltschränke haben des Weiteren den Vorteil, dass diese bereits mit Türen und Anbauelementen versehen sind, welche individuell an die Anlagenanforderungen des automatisierten Fertigungssystems angepasst werden und auch ausgelegt werden können.

Des Weiteren sind diese Schaltschränke so stabil, dass kein weiterer Schutzzaun oder dgl. zum Absichern des Arbeitsraumes des Industrie-Roboters notwendig ist. Es können somit auch Verriegelungen an den Türen angebracht werden, um beispielsweise die Schutzkreise für die Sicherheit von Personen aufzubauen.

Weitere vorteilhafte Ausgestaltungen bzw. Vorteile des Aufbaus eines automatisierten Fertigungssystem mit standardisiert vorhandenen Schaltschränken werden nachfolgend individuell aufgezählt.

So kann ein Industrie-Roboter direkt in einen Schaltschrank integriert werden, sofern der Schaltschrank bezüglich des eigentlichen Arbeitsraumes des Industrie-Roboters in der entsprechenden Dimension seiner inneren Abmessungen ausgewählt wird. Des Weiteren können Anbauten für Stationen direkt am Schaltschrank befestigt werden, da dieser diesbezüglich dafür optimal geeignet ist und auch solche Anbauelemente für Schaltschränke aus dem Stand der Technik individuell ausgewählt werden können.

Des Weiteren gibt es im Sortiment von Katalogen der Schaltschrank-Hersteller weitere Anbauelemente, welche in einfacher Weise je nach den Bedürfnissen des Fertigungssystems ausgewählt und entsprechend geliefert werden können. Da es sich bei Schaltschränken um standardisierte Bauelemente handelt, sind auch die Lieferzeiten dieser standardisierten Schaltschränke äußerst kurz, so dass die Lieferung meist aus einem Lagerbestand des Schaltschrank-Herstellers möglich ist.

Die Schaltschränke sind des Weiteren geprüft und somit im Kollisionsfall auch sicher, da ein Industrie-Roboter den Schaltschrank von innen nach außen nicht durchstoßen kann. Somit besteht auch keinerlei Gefahr für Personen, da ein Berührungsschutz sicher gewährleistet ist.

Des Weiteren können innerhalb eines Schaltschrankes auch Arbeitsstationen mittels eines Lasers oder dgl. mehr integriert angeordnet werden. Schaltschränke sind diesbezüglich dicht gegen Wasser und zum Teil auch komplett luftdicht und somit auch undurchdringlich gegen Laserstrahlung. Dementsprechend ist auch kein weiterer Schutz zur Abschottung von Lasern notwendig, was z. B. bei der Integration eines zum Laserschneiden oder als Beschriftungslaser ausgebildeten Industrie-Roboters in einem Schaltschrank der Fall ist. Ist ein solcher Schaltschrank nach außen abgeschottet, so ist auch eine Klimatisierung denkbar, so dass innerhalb des durch den Schaltschrank definierten Arbeitsraumes auch Fertigungsabläufe realisierbar sind, welche einer bestimmten Temperaturführung bedürfen.

Weiter werden Schaltschränke nach deren Herstellung auch mechanischen Belastungstests ausgesetzt, so dass eine Auslegung der Belastung des gesamten Systems äußerst einfach ist, da solche Belastungswerte oder Belastungsgrenzen für die Schaltschränke bereits vorliegen.

Des Weiteren können zusätzliche Arbeitsstationen mit weiteren Prozessmaschinen schnell und kostengünstig durch eine Anreihung von zusätzlichen Schaltschränken integriert werden. Die Vergrößerung und das Ausbauen eines solchen automatisierten Fertigungssystems durch Hinzufügen weiterer Industrie-Roboter-Stationen ist somit in einfacher Weise realisierbar.

Auch ein Transport der einzelnen aus einem Schaltschrank bestehenden "Fertigungs-Zellen" ist zum Beispiel mittels Hubwagen oder meist durch vorhandene Ösen am Deckel oder am Dach eines Schaltschrankes möglich.

Der Aufbau und die Montage des Systems ist äußerst einfach, da die einzelnen Schaltschränke des "Anreih-Systems" nach dem Aufbau vor Ort lediglich über die vorhandenen Schaltschrankverbindungen miteinander verbunden werden müssen.

Des Weiteren ist auch eine Gestaltung von größeren "Roboterzellen" in einfacher Weise möglich, da ein solcher größerer Arbeitsraum durch einfaches Aufstellen mehrerer miteinander kombinierbarer Schaltschränke um den Industrie-Roboter herum aufgebaut werden kann, sodass diese mehrere "umlaufenden" Schaltschränke eine Art Schutzzaun bilden. In den einzelnen Schaltschränken können des Weiteren einzelne Arbeitsstationen für die verschiedensten Prozesse integriert werden, welche dann wiederum in einfacher Art und Weise durch den Industrie-Roboter mit entsprechenden Werkstücken versorgt werden können.

Des Weiteren können Schaltschränke je nach Ausstattung der Türen komplett mit Schlössern versehen werden, sodass ein Eingriff in das System, insbesondere in den Arbeitsraum eines Industrie-Roboters durch nicht befugte Personen sicher vermieden wird.

Durch die Verkettung und Aneinanderreihung verschiedener Schaltschränke gleicher oder unterschiedlicher Größe können auch Transferstraßen für komplette Montageanlagen mit mehreren Schaltschränken aufgebaut werden.

Aus der obigen Darstellung ist erkennbar, dass der Aufbau eines automatisierten Fertigungssystems mit wenigstens einem Industrie-Roboter durch die Verwendung von standardisierten Schaltschränken eines Schaltschrank-Anreihsystems in einfacher Weise kostengünstig möglich ist. Schaltschränke von Schaltschrank-Anreihsystemen sind äußerst vorteilhaft, da diese als Einzelelemente ohne Seitenwände ausgebildet sind und somit beliebig aneinandergereiht und miteinander verbunden werden können. Dadurch lässt sich mit solchen Schaltschränken ein komplettes automatisiertes Fertigungssystem mit wenigstens einem Industrie-Roboter konzipieren. Auch können Sonderschaltschränke eingesetzt werden, welche schon im Vorfeld an individuell komplexe Anforderungen an das Gehäuse entsprechender Kundenwünsche angepasst werden.

Da, wie dies aus der angegebenen Fundstelle "https://de.wikipedia.org/wiki/Schaltschrank" entnehmbar ist, Schaltschränke für Standard- und/oder Anreihschränke in Standardgrößen angeboten werden, können diese zum Aufbau eines automatisierten Fertigungssystems individuell für jede Arbeitsstation in Größe und Funktion ausgewählt und miteinander kombiniert werden, so dass insgesamt ein flexibles und äußerst kostengünstiges System zum Aufbau des Fertigungssystems zur Verfügung gestellt wird. Weitere vorteilhafte Ausgestaltungen sind den weiteren Unteransprüchen zu entnehmen.

In einer bevorzugter Ausführungsform kann vorgesehen sein, dass die Schaltschränke über Schnellverschlüsse feststehend miteinander verbunden sind. Durch diese Schnellverschlüsse kann ein bestehendes Fertigungssystem ohne großen Aufwand sich ändernden Fertigungsprozessen angepasst werden, indem vorhandene Schaltschränke ausgetauscht oder durch weitere Schaltschränke bei Erweiterung des Fertigungssystems ergänzt werden.

Für eine weitere Erhöhung des flexiblen Einsatzes von Schaltschränken kann vorgesehen sein, dass die Trennwände zwischen den Schaltschränken geschlossen oder wahlweise mit Durchbrüchen versehen sind.

Hierzu kann weiter vorgesehen sein, dass zwischen den Schaltschränken ein Transportsystem für den Werkstücktransport zwischen den durch die Schaltschränke gebildeten Arbeitsräumen vorgesehen ist.

Weiter kann vorgesehen sein, dass nur ein Schaltschrank den Arbeitsraum eines Industrie-Roboters definiert und mit seinen Außenseiten ein Roboterschutzgehäuse bildet und mit seiner offenen Rückseite an eine Prozessmaschine adaptiert ist. Durch diese Ausgestaltung ist ein bereits bestehendes Fertigungssystem beliebig erweiterbar.

Beim Einsatz mehrerer Schaltschränke zur Definition des Arbeitsraumes, insbesondere eines Industrie-Roboters können mehrere den Arbeitsraum U-förmig umschließende Schaltschränke vorgesehen sein, welche den Arbeitsraum des Industrie-Roboters in Sinne eines Roboterschutzgehäuses nach außen abschirmt und dessen Rückseite als Absperrgitter ausgebildet ist oder an eine bestehende Prozessmaschine adaptiert ist. Als Prozessmaschine kann hier beispielweise eine in einem Fertigungsprozess erforderliche Spritzgussmaschine vorgesehen sein, deren Spritzgusstele nach Fertigstellung vom Industrie-Roboter entnommen werden müssen. Da die Schaltschränke einen vollständigen Arbeitsraum für den Industrien-Roboter bilden und dieser auf Grund der U-förmigen Anordnung der Schaltschränke "einseitig" offen ist, können die den Industrie-Roboter aufnehmenden Schaltschränke mit ihrer offenen Rückseite auch an die Spritzgussmaschine adaptiert werden, so dass diese gleichzeitig noch ein zusätzliches Schutzgehäuse für die Spritzgussmaschine bilden.

Ist keine Adaption dieser Art vorgesehen, so kann die offene Rückseite der Schaltschrankanordnung auch "einfach" als Absperrgitter ausgebildet sein, so dass der Arbeitsraum des Industrie-Roboters gegen unbefugten Zutritt oder Zugriff gesichert ist. Auch hierfür ist keine aufwändige konstruktive Auslegung notwendig.

Ist der Schaltschrank als ein hermetisch nach außen abgeschirmte Konstruktion ausgebildet, welche thermisch isoliert ist, so kann der Schaltschrank oder können die Schaltschränke auch zum Aufbau eines insgesamt klimatisierten Arbeitsraumes dienen, wie dies gemäß Anspruch 8 beansprucht ist.

Es ist erkennbar, dass durch den Einsatz von standardisiert vorhandenen Schaltschränken ein flexibles Fertigungssystem insbesondere zur Definition des Arbeitsraumes eines Industrie-Roboters in einfacher Weise realisierbar ist. Auch können durch den Einsatz mehrerer miteinander verbindbarer standardisiert vorhandener Schaltschränke unterschiedlicher oder gleicher Größe weitere Arbeitsräume eines Fertigungssystems definiert werden, ohne dass es hierfür aufwändiger konstruktiver Auslegungen oder Planungen bedarf.

Anhand der Zeichnung wird nachfolgend beispielhaft die Erfindung näher erläutert. Es zeigt:
- Fig. 1: eine schematische Draufsicht auf einen Schaltschrank, in welchem ein Industrie-Roboter integriert angeordnet ist, wobei der Schaltschrank den Arbeitsraum des Industrie-Roboters definiert;
- Fig. 2: einen aus insgesamt drei Schaltschränken bestehenden Arbeitsraum für einen integrierten Industrie-Roboter;
- Fig. 3: einen aus insgesamt vier Schaltschränken unterschiedlicher Größe bestehenden Arbeitsraum eines Fertigungssystems mit integriertem Industrie-Roboter;
- Fig. 4: einen mit insgesamt vier Schaltschränken "umbauten" Arbeitsraum eines zentral angeordneten Industrie-Roboters;
- Fig. 5: einen einseitig offenen Arbeitsraum für einen Industrie-Roboter, wobei der Arbeitsraum mit insgesamt fünf teilweise umfänglich angeordneten Schaltschränken ausgebildet ist;
- Fig. 6: eine Anordnung von insgesamt sechs Schaltschränken mit beispielsweise sechs integrierten Industrie-Robotern sowie mit Warenträgern und einem Transfersystem und Transportbändern.

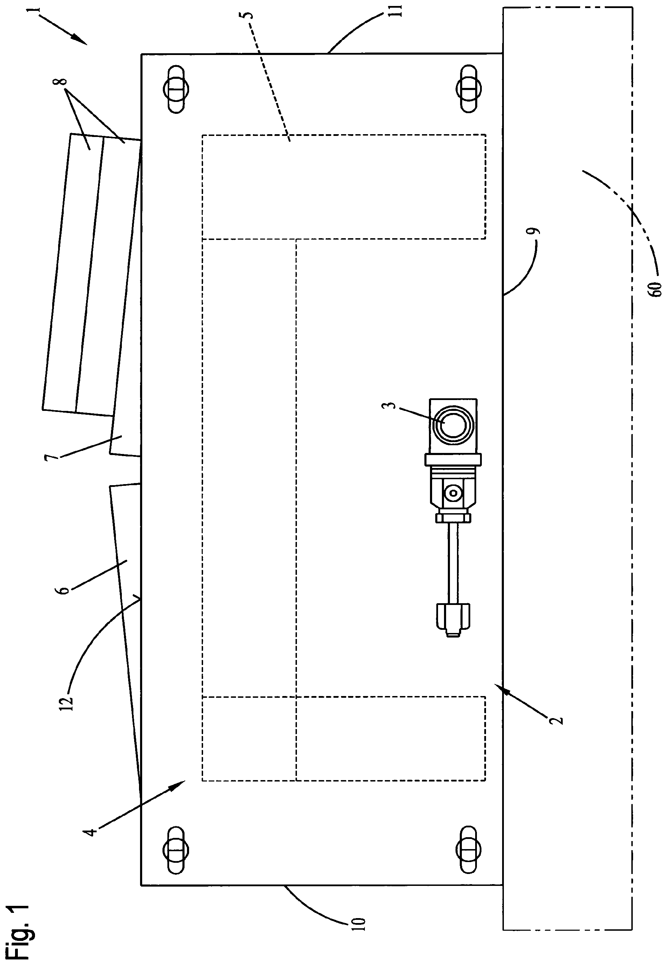

Fig. 1 zeigt eine schematische Darstellung einer Draufsicht einer einfachen Ausführungsvariante eines automatisierten Fertigungssystems 1. Dabei ist in Fig. 1 ein standardisiert vorhandener Schaltschrank 2 vorgesehen, welcher einen Arbeitsraum 4 für einen Industrie-Roboter 3 definiert, in welchem außer dem Industrie-Roboter 3 noch eine Prozessmaschine 5 (in gestichelten Linien angedeutet) beispielsweise in Form einer Drehmaschine, einer Spritzgussmaschine oder auch einer kombinierten Dreh- und Fräsmaschine angeordnet ist. Der Industrie-Roboter 3 dient in diesem Falle als eine Art Be- und Entladesystem zum "Beschicken" und Entleeren der Prozessmaschine 5. Auch können im Bereich der einzelnen gestrichelt dargestellten Felder 5 innerhalb des Schaltschrankes 2 Stationen in Form von Messstationen oder auch Beschriftungssysteme vorgesehen sein.

Wie aus Fig. 1 erkennbar ist, findet insbesondere der Industrie-Roboter 3 zusammen mit der Prozessmaschine 5 im vom Schaltschrank 2 definierten Arbeitsraum 4 vollständig Platz. In dieser Konfiguration weist der Schaltschrank 2 frontseitig wenigstens zwei Türen 6 und 7 auf, über welche der Arbeitsraum 4 von außen für Bedienpersonal zugänglich ist. Die in der Zeichnung rechte Tür 7 ist hier beispielhaft mit einem "Vorbaufenster" 8 ausgestattet, so dass durch diese der im Arbeitsraum laufende Bearbeitungsprozess überwacht werden kann. Beide Türen 6, 7 sind in der Zeichnung zur besseren Erkennbarkeit in einer leicht geöffneten Schwenkposition dargestellt. Während des laufenden Arbeitsprozesses im Arbeitsraum 4 des Schaltschrankes 2 sind die Türen 6, 7 verschlossen und können auch durch ein entsprechendes elektronisches Sicherungssystem gegen unbefugtes Eingreifen gesichert sein (in der Zeichnung nicht dargestellt). Diese Türen 6, 7 sind bei dem dargestellten Ausführungsbeispiel des Schaltschrankes 2 im Bereich der Frontwand 12 vorgesehen, können aber auch beliebig in dem Seitenwänden 10, 11 oder bei einem vollständig geschlossenen Schaltschrank 2 im Bereich der Rückseite 9 auch in unterschiedlicher Anzahl und Größe vorgesehen sein.

Bei offener Rückseite 9 kann der Schaltschrank 2 auch an eine Prozessmaschine 60 adaptiert sein, welche beispielsweise als Spritzgussmaschine ausgebildet sein kann und in Fig. 1 in Phantomlinien angedeutet ist. Bei einer solchen einfachen Adaption kann der Industrie-Roboter 3 in den Arbeitsraum der Spritzgussmaschine 60 zum Zwecke der Teile-Abführung eingreifen. Gleichzeit bildet der Schaltschrank 2 eine zusätzliche Absicherung bzw. Schutzwand für die Spritzgussmaschine 60.

Mit seiner den beiden Türen 6, 7 gegenüberliegenden Rückseite 9 kann der Schaltschrank 2 z. B. auch "wandständig" aufgestellt sein, so dass der Arbeitsraum 4 von der Rückseite 9 her nicht zugänglich ist. Dabei kann die Rückseite 9 aber auch durch eine Blechwand verschlossen sein, so dass der Schaltschrank 2 auch frei im Raum aufgestellt werden kann und dessen Arbeitsraum 4 nur durch die beiden Türen 6 und 7 zugänglich ist. Ist der Schaltschrank 2 Bestandteil eines "Anreih-Systems", so sind in der Regel keine Seitenwände vorhanden. Jedoch, je nach Einsatzart, können auch die beiden Seiten des Schaltschrankes 2 mit beispielsweise Blechtafeln als Seitenwände 10 und 11 verschlossen sein.

Ist der Schaltschrank 2 als Bestandteil eines Anreih-Systems ohne Seitenwände 10 und 11 ausgebildet, so hat dies den Vorteil, dass bei der Aneinanderreihung mehrerer Schaltschränke diese beispielsweise über Transportsysteme miteinander verbunden werden können, so dass es auch möglich ist, komplexere automatisierte Fertigungssysteme aufzubauen.

In den weiteren Zeichnungsfiguren 2 bis 6 sind nachfolgend einige Ausführungsvarianten kurz beschrieben, welche exemplarisch, jedoch nicht abschließend den Einsatz von standardisiert vorhandenen Schaltschränken zum Aufbau von unterschiedlichen, automatisierten Fertigungssystemen darstellen sollen.

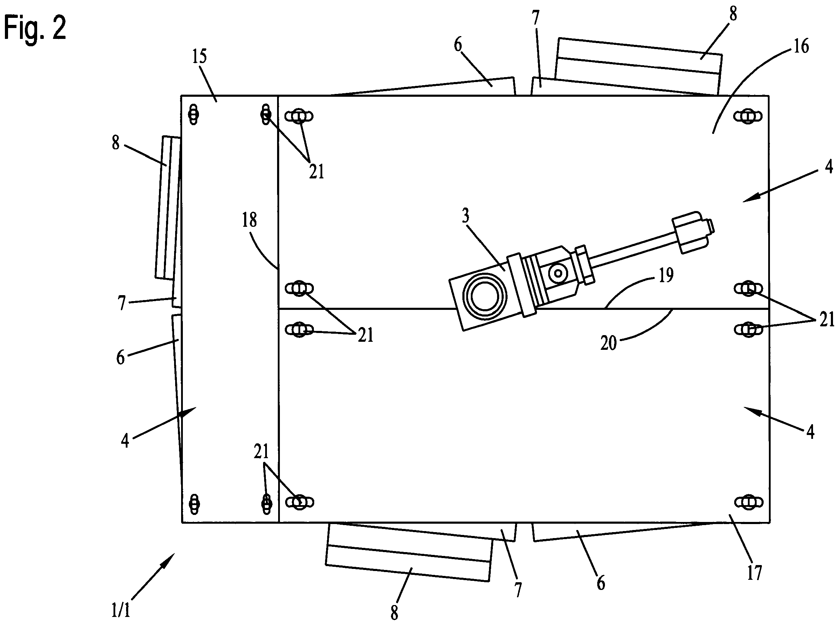

So zeigt Fig. 2 schematisch und beispielhaft eine Ausführungsvariante eines automatisierten Fertigungssystems 1/1, bei welchem der Arbeitsraum 4 für den Industrie-Roboter 3 aus insgesamt drei Schaltschränken 15, 16 und 17 gebildet wird. Die Schaltschränke 15, 16, 17 sind auf ihren einander zugewandten Rückseiten 18, 19 und 20 offen ausgebildet, so dass bei dieser Ausführungsvariante der gesamte Arbeitsraum 4 für den Industrie-Roboter 3 gemeinschaftlich von allen drei Schaltschränken 15, 16, 17 gebildet wird. Alle drei Schaltschränke 15, 16, 17 können dabei über schematisch dargestellte Schnellverschlüsse 21 miteinander feststehend verbunden sein. Auch ist aus Fig. 2 erkennbar, dass alle drei Schaltschränke 15, 16, 17 frontseitig mit Türen 6, 7 ausgestattet sind, wie dies für den einzelnen Schaltschrank 2 aus Fig. 1 beschrieben wurde. Auch kann eine der Türen 7 ebenfalls mit einem Vorbaufenster 8 versehen sein, wie dies in Fig. 2 ebenfalls andeutungsweise dargestellt ist. Damit ist auch bei der Ausführungsvariante des automatisierten Fertigungssystems 1/1 nach Fig. 2 der Arbeitsraum 4 bei Bedarf über eine der Türen 6 oder 7 zugänglich. Auch diese Türen 6, 7 können aus Sicherheitsgründen mit einem elektronischen Schließsystem ausgestattet sein, welches in der Zeichnung jedoch nicht dargestellt ist. Wie weiter aus Fig. 2 erkennbar ist, sind die Schaltschränke 15, 16 und 17 unterschiedlich groß ausgebildet. Werden solche Schaltschränke 15, 16, 17 anderweitig miteinander kombiniert oder in weiteren Größen in unterschiedlicher Anzahl aneinandergereiht, so sind unterschiedliche Arbeitsräume 4 für die unterschiedlichsten Fertigungsaufgaben durch die Schaltschränke 15, 16, 17 definierbar.

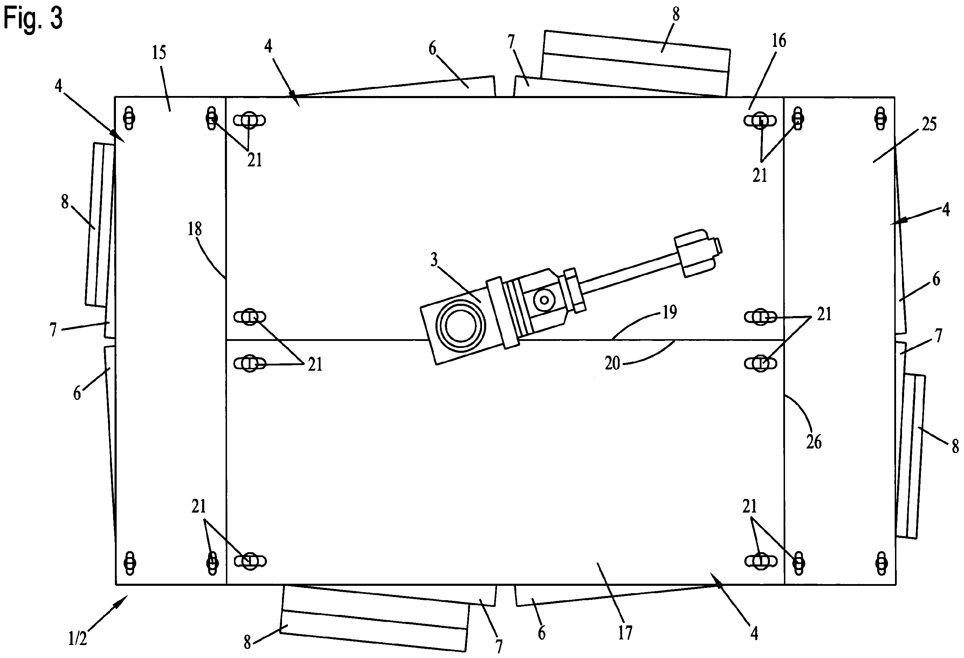

So zeigt Fig. 3 eine weitere Ausführungsvariante eines automatisierten Fertigungssystems 1/2, bei welchem der Arbeitsraum 4 aus den drei Schaltschränken 15, 16 und 17 aus Fig. 2 und einem weiteren Schaltschrank 25 gebildet wird. Damit ist der Arbeitsraum 4 um den einen Schaltschrank 25 erweitert, so dass in diesem weitere Fertigungsaufgaben angeordnet werden können. Auch hier sind frontseitig wiederum entsprechende Türen 6, 7 vorgesehen, welche ebenfalls bei Bedarf mit einem Vorbaufenster 8 ausgerüstet sein können. Die Rückseiten 18, 19 und 20 sowie 26 der Schaltschränke 15, 16, 17, 25 sind auch bei dieser Ausführungsvariante vorzugsweise offen ausgebildet, so dass alle vier Schaltschränke 15, 16, 17, 25 zusammen einen einheitlichen Arbeitsraum 4 für den integriert angeordneten Industrie-Roboter 3 bilden. Auch können in den einzelnen Bereichen der vier Schaltschränke 15, 16, 17 und 25 zusätzliche Prozessmaschinen zum durchführen zusätzliche Fertigungsprozesse oder auch Messstationen und dgl. mehr angeordnet sein, welche durch den Industrie-Roboter 3 bestückt werden können.

Es ist erkennbar, dass in dem aus den Schaltschränken 15, 16, 17 und 25 bestehenden Arbeitsraum 4 weitere Fertigungsprozesse ohne einen größeren Konstruktionsaufwand für das Fertigungssystem 1/2 angeordnet werden können, ohne dass spezielle Konstruktionen erforderlich sind. Auch sind diese vier Schaltschränke 15, 16, 17 und 25 wiederum in einfacher Art und Weise mit Schnellverschlüssen 21 miteinander verbunden und können variabel den Fertigungsanforderungen angepasst werden, indem einzelne Schaltschränke entfernt oder weitere hinzugefügt werden.

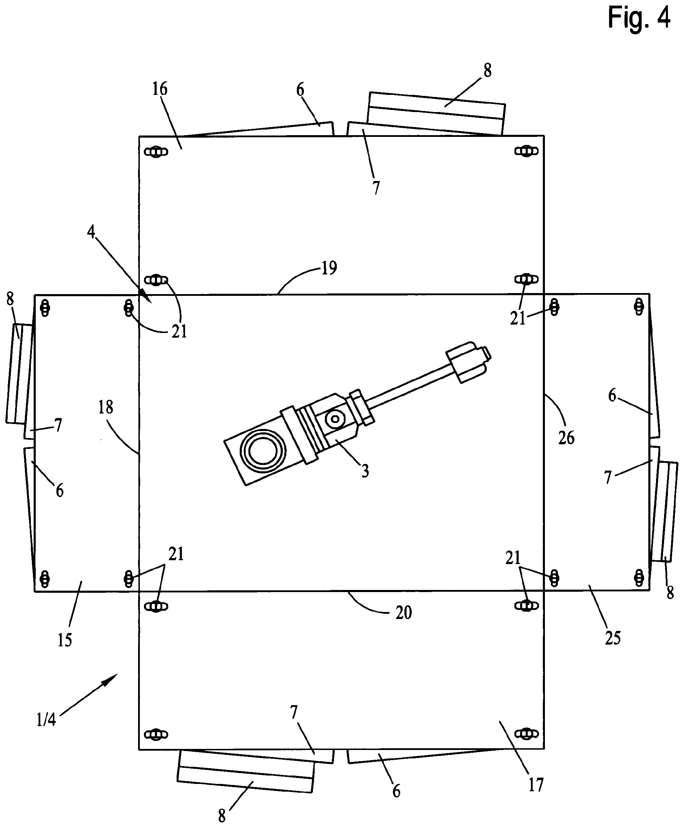

Weiter kann, wie dies beispielhaft aus Fig. 4 erkennbar ist, durch die vier Schaltschränke 15, 16, 17 und 25 aus Fig. 3 auch "nur" ein zentraler Arbeitsraum 4 definiert werden. Innerhalb der durch die einzelnen Schaltschränke 15, 16, 17, 25 definierten Räume können unterschiedliche Prozessmaschinen oder auch Fertigungsstation eines flexiblen Fertigungssystems angeordnet sein, welche über die frontseitigen Türen 6, 7 der Schaltschränke 15, 16, 17, 25 zugänglich sind. Es ist erkennbar, das durch "einfaches Umstellen" der Schaltschränke 15, 16, 17, 25 aus Fig. 3 eine andere Fertigungskonfiguration für ein automatisiertes Fertigungssystem 1/4 erreichbar ist. In Fig. 4 sind für dieselben Teile auch dieselben Bezugszeichen eingetragen wie in Fig. 3, so dass die Beschreibung zu Fig. 3 auch auf Fig. 4 zu lesen ist.

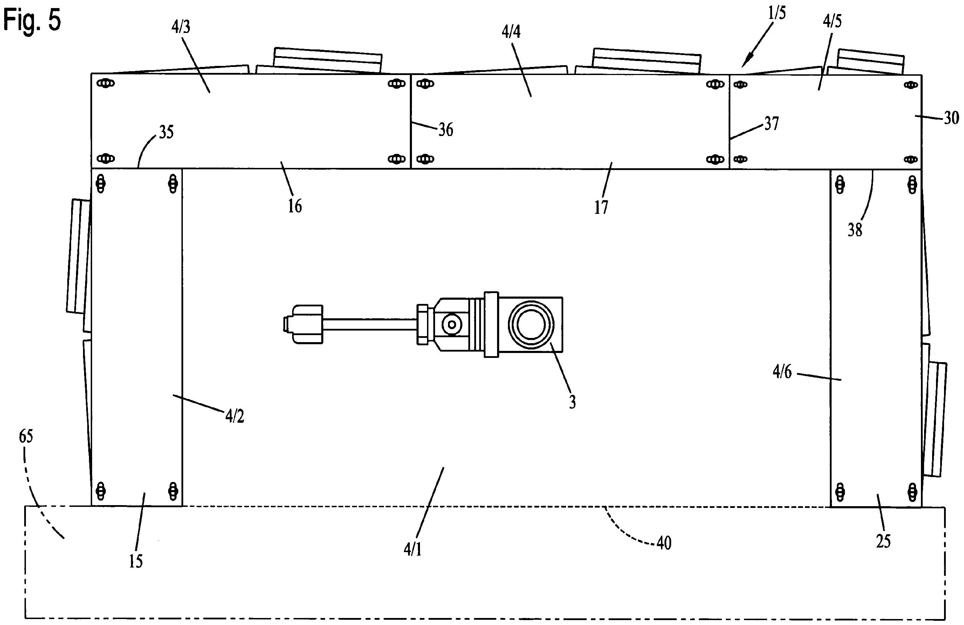

Für die Möglichkeiten einer sinnfälligen variablen Anordnung zur Definition eines oder mehrerer Arbeitsräume zeigt Fig. 5 eine Ausführungsvariante eines automatisierten Fertigungssystems 1/5, bei welcher die beiden Schaltschränke 15 und 25 seitlich angeordnet sind. Die beiden Schaltschränke 16 und 17 aus den Fig. 3 und 4 sind hingegen von links nach rechts hintereinander angeordnet.

Rechts neben dem Schaltschank 17 ist ein weiterer, kürzere Schaltschrank 30 vorgesehen. Bei dieser Konfiguration des automatisierten Fertigungssystems 1/5 wird durch die Schaltschränke 15, 16, 17, 25, 30 eine Art zentraler Arbeitsraum 4/1 gebildet. In diesem ist der zugehörige Industrie-Roboter 3 angeordnet. Die fünf um den Industrie-Roboter 3 angeordneten Schaltschränke 15, 16, 17, 30 und 25 können dabei selbst wieder "kleinere" Arbeitsräume 4/2, 4/3, 4/4, 4/5 und 4/6 bilden, welche beispielsweise mit verschiedenen Prozessmaschinen wie z. B. Drehmaschinen, CNC-Maschinen, Bohr- und -fräswerke und dgl. mehr ausgestattet sein können. Diese Prozessmaschinen können über den Industrie-Roboter 3 variabel mit Werkstücken be- und entladen werden. Auch ist vorstellbar, dass die "Trennwände" 35, 36, 37 und 38 zwischen den Schaltschränken 15, 16 - 16, 17 - 17, 30 und 30, 25 mit Durchbrüchen versehen sind, durch welche hindurch einzelne Werkstücke auch mittels einer Fördereinrichtung wie beispielsweise eines Förderbandes (in der Zeichnung nicht dargestellt) zwischen den Schaltschränken transportiert werden können. Um den "einseitig offenen" Arbeitsraum 4/1 gegen unbefugtes Betreten zu sichern, kann ein einfaches Absperrgitter 40 vorgesehen sein, welches in einfacher Weise zusammen mit den Schaltschränken 15, 16, 17, 25, 30 bodenständig aufgestellt werden kann. Das Absperrgitter 40 ist in Fig. 5 schematisch gestrichelt dargestellt.

Die Schaltschränke 15, 16, 17, 25, 30 umschließen den Arbeitsraum 4/1 des Industrie-Roboters 3 U-förmig. Damit wäre die den Schaltschränken 16, 17 und 30 gegenüberliegende "Rückseite" mit dem Sperrgitter auch ohne Sperrgitter 40 auszubilden, so dass der gesamte Schrankaufbau auch an eine bestehende Prozessmaschine, wie beispielsweise eine Spritzgussmaschine 65 adaptiert werden kann, welche in Fig. 5 lediglich schematisch in Phantomlinien dargestellt ist.

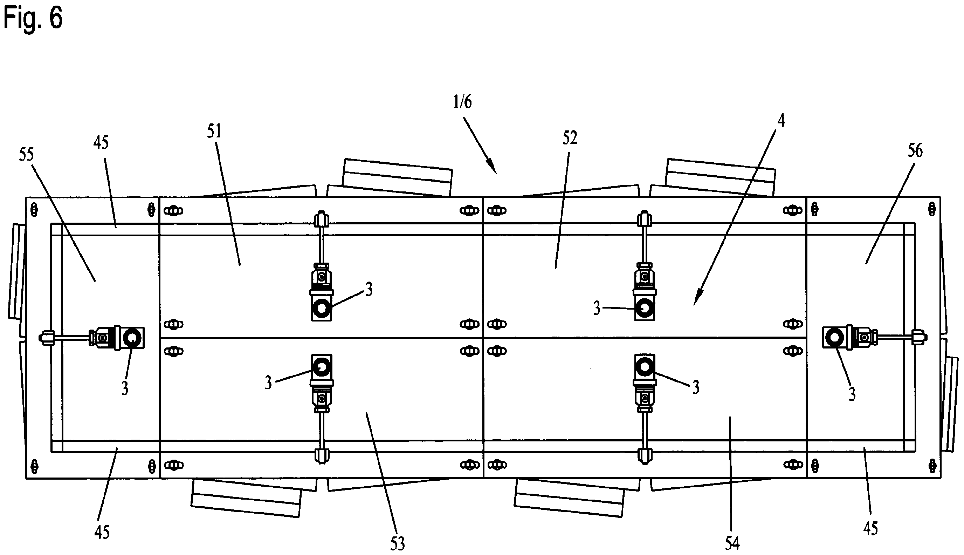

Weiter zeigt Fig. 6 noch beispielhaft eine weitere Ausführungsvariante eines automatisierten Fertigungssystems 1/6, dessen zentraler Arbeitsraum 4 durch insgesamt sechs umlaufend aufgestellte Schaltschränke 51, 52, 53, 54, 55 und 56 gebildet wird. Die Schaltschränke 51, 52 und 53, 54 sind dabei paarweise nebeneinander und "übereinander" angeordnet. Dabei sind die beiden linken Schaltschränke 51 und 53 über einen seitlichen Schaltschrank 55 miteinander verbunden, während die beiden rechten Schaltschränke über einen weiteren Schaltschank 56 miteinander in Verbindung stehen. In jedem der Schaltschränke 51, 52, 53, 54, 55 und 56 ist ein Industrie-Roboter 3 angeordnet, welcher zur Manipulation von Werkstücken (in der Zeichnung nicht dargestellt) dient. Dabei findet eine solche Manipulation der Werkstücke nur innerhalb eines durch den jeweiligen Schaltschrank 51, 52, 53, 54, 55 bzw. 56 definierten Arbeitsraumes statt. Um nun Werkstücke auch zwischen den Schaltschränken 51, 52, 53, 54, 55 und 56 manipulieren zu können, ist bei der dargestellten Ausführungsvariante des automatisierten Fertigungssystems 1/6 ein Warenträger zusammen mit einem beispielsweise als Transportband ausgebildeten Transfersystem 45 vorgesehen. Dabei sind für den Transport der Werkstücke zwischen den Schaltschränken 51, 52, 53, 54, 55 und 56 entsprechende Durchbrüche vorgesehen, welche in der Zeichnung nicht dargestellt sind.

Zusammenfassend ist erkennbar, dass durch den Aufbau des Arbeitsraumes 4 eines automatisierten Fertigungssystems 1 bis 1/6 mittels Schaltschränken eine äußerst kostengünstige und vielseitig einsetzbare Konstruktion realisiert wird, welche sehr variabel an die erforderlichen oder gewünschten Fertigungsbedingungen anpassbar ist.

Hierbei können durch entsprechende Auswahl der standardisiert vorhandenen Schaltschränke und Anordnungen eines oder mehrerer Industrie-Roboter Arbeitsräume in den unterschiedlichsten Abmessungen erstellt werden.

Die Höhe eines solchen Arbeitsraumes kann dabei bis zu 2,4 m betragen, was einer "Standardhöhe" eines größeren Schaltschrankes entspricht. Dabei sind, je nach Konfiguration der Schaltschränke, beispielsweise Grundabmessungen von 3 bis 4 m oder mehr bei einer gleichzeitig variablen Breite von 0,6 bis 1,2 m oder auch von 0,3 m bis 0,8 m aufstellbar. Dies ist letztendlich von den Anforderungen an das automatisierte Fertigungssystem mit seinen Industrie-Robotern aber auch von den zu integrierenden Prozessmaschinen und damit letztendlich vom insgesamt benötigten Arbeitsraum abhängig.

## Patentansprüche

1. Automatisiertes Fertigungssystem (1, 1/1, 1/2, 1/4, 1/5, 1/6) mit einem Industrieroboter (3) und weiterer Prozessmaschinen (5), welche in einem vorbestimmten Arbeitsraum (4, 4/1, 4/2, 4/3 4/4 4/5, 4/6) des Fertigungssystems (1, 1/1, 1/2, 1/4, 1/5, 1/6) angeordnet sind,
wobei der Arbeitsraum (4, 4/1, 4/2, 4/3, 4/4, 4/5, 4/6) durch einen oder mehrere standardisiert vorhandene Schaltschränke (2, 15, 16, 17, 25, 30, 51, 52, 53, 54, 55, 56) definiert ist, wobei der oder die Schaltschränke (2, 15, 16, 17, 25, 30, 51, 52, 53, 54, 55, 56) mit Türen in beliebiger Anordnung (6, 7) versehen sind, und
wobei der oder die Schaltschränke (2, 15, 16, 17, 25, 30, 51, 52, 53, 54, 55, 56) Teil eines Schaltschrank-Anreihsystems sind.

2. Fertigungssystem nach Anspruch 1, **dadurch gekennzeichnet, dass** die Schaltschränke (2, 15, 16, 17, 25, 30, 51, 52, 53, 54, 55, 56) über Schnellverschlüsse (21) feststehend miteinander verbunden sind.

3. Fertigungssystem nach einem der Ansprüche 1 bis 2, **dadurch gekennzeichnet, dass** die Trennwände (35, 36, 37, 38) zwischen den aneinander gereihten Schaltschränken (2, 15, 16, 17, 25, 30, 51, 52, 53, 54, 55, 56) geschlossen sind oder wahlweise mit Durchbrüchen versehen sind.

4. Fertigungssystem nach einem der Ansprüche 1 bis 3, **dadurch gekennzeichnet, dass** zwischen den Schaltschränken (2, 15, 16, 17, 25, 30, 51, 52, 53, 54, 55, 56) ein Transportsystem (45) für den Werkstücktransport zwischen den durch die Schaltschränke (2, 15, 16, 17, 25, 30, 51, 52, 53, 54, 55, 56) gebildeten Arbeitsräume (4, 4/1, 4/2, 4/3 4/4 4/5, 4/6) vorgesehen ist.

5. Fertigungssystem nach Anspruch 1 oder 2, **dadurch gekennzeichnet, dass** nur ein Schaltschrank (2) den Arbeitsraum (4) eines Industrie-Roboters (3) definiert und mit seinen Außenseiten (10, 11, 12) ein Roboterschutzgehäuse bildet und mit seiner offenen Rückseite (9) an eine Prozessmaschine (60) adaptiert ist.

6. Fertigungssystem nach Anspruch 1 oder 2, **dadurch gekennzeichnet, dass** der Arbeitsraum (4/1) des Industrie-Roboters (3) durch mehrere aneinandergereihte, den Arbeitsraum (4/1) U-förmig umschließende Schaltschränke (15, 16, 17, 25, 30) gebildet wird, welche den Arbeitsraum (4/1) des Industrieb-Roboters (3) im Sinne eines Roboterschutzgehäuses nach außen abschirmt und dessen Rückseite als Absperrgittere (40) ausgebildet ist oder an eine bestehende Prozessmaschine (65) adaptiert ist.

7. Fertigungssystem nach einem der Ansprüche 1 bis 6, **dadurch gekennzeichnet, dass** der aus dem oder den Schaltschränken (2, 15, 16, 17, 25, 30, 51, 52, 53, 54, 55, 56) bestehende Arbeitsraum (4, 4/1, 4/2, 4/3, 4/4, 4/5, 4/6) klimatisiert ist.

## Claims

1. An automated manufacturing system (1, 1/1, 1/2, 1/4, 1/5, 1/6) comprising an industrial robot (3) and further process machines (5), which are arranged in a predetermined working space (4, 4/1, 4/2, 4/3, 4/4, 4/5, 4/6) of the manufacturing system (1, 1/1, 1/2, 1/4, 1/5, 1/6),
wherein the working space (4, 4/1, 4/2, 4/3, 4/4, 4/5, 4/6) is defined by one or several control cabinets (2, 15, 16, 17, 25, 30, 51, 52, 53, 54, 55, 56) that are available in a standardized manner, wherein the control cabinet or cabinets (2, 15, 16, 17, 25, 30, 51, 52, 53, 54, 55, 56) are provided with doors in any arrangement (6, 7), and
wherein the control cabinet or cabinets (2, 15, 16, 17, 25, 30, 51, 52, 53, 54, 55, 56) are part of a side-by-side control cabinet system.

2. The manufacturing system according to claim 1, **characterized in that** the control cabinets (2, 15, 16, 17, 25, 30, 51, 52, 53, 54, 55, 56) are connected to one another in a stationary manner via quick-release fasteners (21) .

3. The manufacturing system according to any one of claims 1 to 2, **characterized in that** the separating walls (35, 36, 37, 38) between the lined-up control cabinets (2, 15, 16, 17, 25, 30, 51, 52, 53, 54, 55, 56) are closed or are optionally provided with apertures.

4. The manufacturing system according to any one of claims 1 to 3, **characterized in that** a transport system (45) for the workpiece transport between the working spaces (4, 4/1, 4/2, 4/3, 4/4, 4/5, 4/6) formed by the control cabinets (2, 15, 16, 17, 25, 30, 51, 52, 53, 54, 55, 56) is provided between the control cabinets (2, 15, 16, 17, 25, 30, 51, 52, 53, 54, 55, 56).

5. The manufacturing system according to claim 1 or 2, **characterized in that** only one control cabinet (2) defines the working space (4) of an industrial robot (3) and forms a robot protective housing with its outer sides (10, 11, 12) and is adapted to a process machine (60) with its open rear side (9).

6. The manufacturing system according to claim 1 or 2, **characterized in that** the working space (4/1) of the industrial robot (3) is formed by several lined-up control cabinets (15, 16, 17, 25, 30) enclosing the working space (4/1) in a U-shaped manner, which shields the working space (4/1) of the industrial robot (3) to the outside in terms of a robot protective housing and the rear side of which is formed as protective grating (40) or is adapted to an existing process machine (65).

7. The manufacturing system according to any one of claims 1 to 6, **characterized in that** the working space (4, 4/1, 4/2, 4/3, 4/4, 4/5, 4/6) consisting of the control cabinet or cabinets (2, 15, 16, 17, 25, 30, 51, 52, 53, 54, 55, 56) is air-conditioned.

## Revendications

1. Système de fabrication automatisé (1, 1/1, 1/2, 1/4, 1/5, 1/6) équipé d'un robot industriel (3) et d'autres machines de traitement (5) qui sont placées dans une zone d'usinage prédéterminée (4, 4/1, 4/2, 4/3, 4/4, 4/5, 4/6) du système de fabrication (1, 1/1, 1/2, 1/4, 1/5, 1/6),
la zone d'usinage (4, 4/1, 4/2, 4/3, 4/4, 4/5, 4/6) étant définie par une ou plusieurs armoires de commande normalisées (2, 15, 16, 17, 25, 30, 51, 52, 53, 54, 55, 56), l'armoire ou les armoires de commande (2, 15, 16, 17, 25, 30, 51, 52, 53, 54, 55, 56) étant munie(s) de portes dans les dispositions désirées (6, 7), et l'armoire ou les armoires de commande (2, 15, 16, 17, 25, 30, 51, 52, 53, 54, 55, 56) faisant partie du système d'alignement de l'armoire de commande.

2. Système de fabrication selon la revendication 1, **caractérisé en ce que** les armoires de commande (2, 15, 16, 17, 25, 30, 51, 52, 53, 54, 55, 56) sont reliées les unes aux autres de façon fixe (21) via des fermetures rapides.

3. Système de fabrication selon l'une des revendications 1 à 2, **caractérisé en ce que** les séparateurs (35, 36, 37, 38) entre les armoires alignées (2, 15, 16, 17, 25, 30, 51, 52, 53, 54, 55, 56) sont fermés ou munis de percées en option.

4. Système de fabrication selon l'une des revendications 1 à 3, **caractérisé en ce qu'**entre les armoires de commande (2, 15, 16, 17, 25, 30, 51, 52, 53, 54, 55, 56), un système de transport (45) est prévu pour le transport de la pièce à usiner entre les zones d'usinage (4, 4/1, 4/2, 4/3, 4/4, 4/5, 4/6) constituées des armoires de commande (2, 15, 16, 17, 25, 30, 51, 52, 53, 54, 55, 56).

5. Système de fabrication selon l'une des revendications 1 ou 2, **caractérisé en ce qu'**une seule armoire de commande (2) définit la zone d'usinage (4) d'un robot industriel (3) et **en ce qu'**à l'aide de ses faces externes (10, 11, 12), il constitue le carter de protection du robot et **en ce qu'**à l'aide de sa face arrière ouverte (9), il est adapté à une machine de traitement (60) .

6. Système de fabrication selon les revendications 1 ou 2, **caractérisé en ce que** la zone d'usinage (4/1) du robot industriel (3) est constituée de plusieurs armoires de commande alignées en forme de U (15, 16, 17, 25, 30) entourant la zone d'usinage (4/1) du robot industriel (3) qui isole vers l'extérieur dans le sens du carter de protection et dont la face arrière est conçue comme barrière (40) ou adaptée à la machine de traitement existante (65).)

7. Système de fabrication selon les revendications 1 à 6, **caractérisé en ce que** la zone d'usinage 4, 4/1, 4/2, 4/3, 4/4, 4/5, 4/6) composée de l'armoire ou des armoires de commande (2, 15, 16, 17, 25, 30, 51, 52, 53, 54, 55, 56) est climatisée.
